(19) Europäisches Patentamt
European Patent Office
Office européen des brevets

(11) **EP 3 436 511 B1**

(12) **EUROPÄISCHE PATENTSCHRIFT**

(45) Veröffentlichungstag und Bekanntmachung des Hinweises auf die Patenterteilung:
**09.06.2021 Patentblatt 2021/23**

(21) Anmeldenummer: **17725501.5**

(22) Anmeldetag: **30.03.2017**

(51) Int Cl.:
*C08J 11/14* *(2006.01)*   *B29B 17/02* *(2006.01)*

(86) Internationale Anmeldenummer:
**PCT/DE2017/100252**

(87) Internationale Veröffentlichungsnummer:
**WO 2017/167332 (05.10.2017 Gazette 2017/40)**

(54) **VERFAHREN UND ANLAGE ZUM RECYCLING CARBONFASERVERSTÄRKTER POLYMERE**

METHOD AND SYSTEM FOR RECYCLING CARBON-FIBER-REINFORCED POLYMERS

PROCÉDÉ ET INSTALLATION POUR RECYCLER DES POLYMÈRES RENFORCÉS PAR FIBRES DE CARBONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2016 DE 102016105966**

(43) Veröffentlichungstag der Anmeldung:
**06.02.2019 Patentblatt 2019/06**

(73) Patentinhaber:
• **Bünger, Helmuth**
  **09244 Lichtenau (DE)**
• **Brühl-Saager, Michael**
  **73525 Schwäbisch-Gmünd (DE)**

(72) Erfinder:
• **Bünger, Helmuth**
  **09244 Lichtenau (DE)**
• **Brühl-Saager, Michael**
  **73525 Schwäbisch-Gmünd (DE)**

(74) Vertreter: **Rumrich, Gabriele**
  **Patentanwältin**
  **Limbacher Strasse 305**
  **09116 Chemnitz (DE)**

(56) Entgegenhaltungen:
DE-A1-102013 200 482   FR-A1- 3 007 412
JP-A- H1 087 872   JP-A- 2003 190 759
JP-A- 2005 336 331

• BAI Y ET AL: "Chemical recycling of carbon fibers reinforced epoxy resin composites in oxygen in supercritical water", MATERIALS AND DESIGN, LONDON, GB, Bd. 31, Nr. 2, 1. Februar 2010 (2010-02-01), Seiten 999-1002, XP026703149, ISSN: 0261-3069, DOI: 10.1016/J.MATDES.2009.07.057 [gefunden am 2009-08-03]
• CHASE C. KNIGHT ET AL: "Fabrication and properties of composites utilizing reclaimed woven carbon fiber by subcritical and supercritical water recycling", MATERIALS CHEMISTRY AND PHYSICS, Bd. 149-150, 28. Oktober 2014 (2014-10-28) , Seiten 317-323, XP055388332, Switzerland, Taiwan, Republic of China ISSN: 0254-0584, DOI: 10.1016/j.matchemphys.2014.10.023

**Beschreibung**

Die Erfindung betrifft ein Verfahren und eine Anlage zum Recycling carbonfaserverstärkter Polymere und findet insbesondere für die vollständige Trennung von Carbonfasermatten und zugehörigen Polymeren Anwendung.

In der modernen Weltwirtschaft bestimmen mehrere parallel zueinander verlaufende Trends die Ziele und das Tempo der Entwicklungen. Beispielsweise werden im Flugzeugbau, Fahrzeugbau, Maschinenbau und dem Bauwesen ständig leichtere und hochfestere Baumaterialien verlangt. Bei der Fertigung sollen die Ressourcen in Form von Energie und metallische Rohstoffe gespart werden. Insbesondere im Flugzeugbau, dem Fahrzeugbau und einigen anderen Industriezweigen bedeutet der Einsatz leichterer und festerer Baustoffe eine direkte Energieeinsparung, parallel zu den bereits genannten Einsparungen an Ressourcen.

Insbesondere kommt diesem Trend der Einsatz von carbonfaserverstärkten Polymeren in festigkeitsbestimmten Bauteilen, in den genannten Industriezweigen, entgegen. Aufgrund des aufwendigen Herstellungsprozesses der Carbonfasermatten und den daraus resultierenden hohen Materialkosten war anfangs der Einsatz dieser Bauteile besonders den Industriezweigen vorbehalten, welche in der Lage waren diese hohen Materialkosten auf die Erzeugnisse umzulegen.

Durch die Marktentwicklungen, auch in anderen Industriezweigen, steigt die Nachfrage nach solch hochwertigen Baustoffen. Die Entwicklung geht schleppend voran, weil einerseits die Kosten für die Kohlefasermatten noch sehr hoch sind und auch andererseits noch nicht genügend Carbonfasermaterial bereit steht, um den Bedarf dieser neuen Bedarfsträger zu decken. Aufgrund des im Verhältnis geringen Angebots resultieren daraus hohe Preise für die Kohlefasermatten.

Parallel zu diesem Trend zu hochwertigeren, energie- und ressourcensparenden Baustoffen entwickeln sich die Forderungen für einen ressourcensparenden und umweltschonenden Umgang mit den Abfallstoffen, welche im Herstellungsprozess solcher Bauteile entstehen und zur Nutzung der ausgemusterten Bauteile, nach deren Lebenszeit.

Die derzeitig zur Verfügung stehenden Recyclingtechnologien durch Verbrennung oder durch das Herstellen wertreduzierter Carbonfasern enthaltender Kunststoffgemische für den Einsatz in Bauteilen mit geringeren Festigkeits- und Sicherheitsanforderungen recyceln nicht rückstandsfrei und umweltschonend und stellen keine Einsatzstoffe für einen zweiten Lebenszyklus der Carbonfasermatten, im hohen Wertsegment, dar.

Aus der Druckschrift DE 10 2011 115 966 A1 ist ein Verfahren zur Herstellung eines partikulären Kohlenstofffaser-Rezyklats bekannt. Das Verfahren umfasst dabei die folgenden Schritte: Zerkleinern eines CFK-Materials, das Kohlenstofffaser-Bündel in einem Matrixmaterial aufweist, in ein Rezyklat Ausgangsmaterial, in dem von Matrixmaterial umgebene Kohlenstofffaser-Bündel-Abschnitte vorliegen. Folgend wird das Rezyklat Ausgangsmaterial einer Zersetzungsbehandlung des Matrixmaterials bis zu einem Grad unterzogen, bei dem die Kohlenstofffasern der Bündel-Abschnitte gebunden bleiben und die Kohlenstofffasern an einem Umfang der Bündel-Abschnitte im Wesentlichen frei liegen. Dabei erfolgt die Bildung des Kohlenstofffaser-Rezyklats.

In der Druckschrift DE 10 2008 002 846 A1 wird ein Recyclingverfahren zum Recyceln von faserverstärkten und/oder faserhaltigen Halbzeugen und/oder Bauteilen zur späteren Verwendung in der Produktion von faserverstärkten und/oder faserhaltigen Halbzeugen und/oder Bauteilen beschrieben.

Die Halbzeuge und/oder Bauteile bestehen aus Fasern und einem Matrixwerkstoff, wobei die Fasern in dem Matrixwerkstoff in Form von Gewebe, unidirektionalen Lagen und/oder Gelegen und/oder einzelnen Verstärkungsfasern und/oder Verstärkungsfaserbündeln angeordnet sind. Das Verfahren betrifft folgende Schritte: Trennen der im Matrixwerkstoff gebundenen Fasern von dem Matrixwerkstoff in freie Fasern, das Benetzen der freien Fasern nach dem Trennen mit einem Bindemittel zu benetzten Fasern und eine Anordnung hierzu.

Sowohl die Druckschrift DE 10 2011 115 966 A1 wie auch DE 10 2008 002 846 A1 nutzen pyrolytische Reaktionsbedingungen bei denen die Ausgangsmaterialien hohen Temperaturen ausgesetzt werden. Dabei werden die Kohlefasern freigelegt, jedoch thermisch hoch belastet. Die Kohlefasern werden in der Regel zerkleinert und liegen in den Folgeschritten ungeordnet vor, wobei sie als Formmassen weiter genutzt werden.

Die Druckschrift DE 10 2013 200 482 A1 beschreibt ein Verfahren zur Wiedergewinnung von Verstärkungsfasern aus faserverstärkten Kunststoffen. Dieses Verfahren arbeitet bei Drücken von weniger als 50 bar und Temperaturen unter 260 °C bei einer Reaktionszeit von über 120 Minuten. Gemäß dem Verfahren werden faserverstärkte Kunststoffe in wässrigem Milieu unter Druckerhöhung umgesetzt, wobei sich die Polymermatrix auflöst und die Verstärkungsfasern ohne erkennbare Schädigung in der Qualität von Neuware zurückgewonnen werden. Jedoch bleiben die "Schlichte" auf den Fasern zurück.

Methoden zur energetischen Optimierung des Recyclingprozesses und zur Reduzierung des Arbeitsaufwandes für den Recyclingprozess sind nicht beschrieben. Die beschriebenen Einsätze zum Halten der Bauteile während des Recyclingprozesses sind zudem recht aufwändig. Die beschriebenen Zwischenlagen aus "Blech" behindern die Durchströmung für den Recyclingprozess, was zu einer unnötigen Verlängerung des Recyclingprozesses führt. Des Weiteren werden, durch den Verbleib der "Schlichte" auf den Fasern der Wiedereinsatz und die Formbarkeit der Carbonfasermatten durch Faserbrüche stark eingeschränkt. Ansonsten kann es zu Produkt-Unverträglichkeiten mit den eingesetzten Chemikalien kommen.

Aus der Publikation "Fabrication and properties of composites utilizing reclaimed woven carbon fiber by subcritical and supercritical water recycling" (C. Knight und C. Zeng, 2015) ist ebenfalls ein Recyclingverfahren für carbonfaserverstärkte Polymere bekannt.

Dieses Verfahren arbeitet im Parameterbereich des überkritischen Wassers, wobei zusätzlich mit alkalischen Katalysatoren gearbeitet wird, welche die Standzeit der Autoklaven negativ beeinflussen und zusätzliche Kosten für die Katalysatoren und die Einrichtung zum Einbringen der Katalysatoren bedeuten. Die freigelegten Carbonfasern werden mit Aceton behandelt. Dabei entstehen größere Mengen kontaminiertes Lösemittel und es sind zusätzliche Apparaturen für diese Behandlung der Carbonfasern und für die Entsorgung des kontaminierten Lösungsmittels erforderlich.

Die abgebauten Kunststoffverbindungen werden durch Eindampfen der kondensierten Wasserphase wiedergewonnen. Dieser Verfahrensschritt erfordert besondere Apparaturen und erfordert hohe Energieaufwendungen.

Die Druckschriften JP 2005 336331 A und JP 2003 190759 nutzen superkritisches Wasser und leiten dieses durch einen Druckbehälter in dem carbonfaserverstärkte Kunststoffe platziert sind. Der Matrixkunststoff wird dabei zersetzt und die Reaktionsprodukte mit dem Fluid ausgeschleust. Dadurch soll eine Spülung der Carbonfaser vermieden werden.

Das in der Druckschrift FR 3 007 412 A1 beschriebene Verfahren unterscheidet sich zu den Druckschriften JP 2005 336331 A und JP 2003 190759 durch die Kreislaufführung des Mediums.

Ein weiteres Verfahren wird in der Veröffentlichung von Bay Y, et al.: "Chemical recycling of carbon fiber reinforced epoxy resin composites in oxygen in supercritical water" beschrieben und nutzt zur Auflösung der Kunststoffmatrix den im superkritischen Wasser gelösten Sauerstoff.

Dabei handelt sich um ein Verfahren das besser unter dem Namen SCWO Superkritische Wasser Oxidation bekannt ist.

Der gelöste Sauerstoff oxidiert die Kunststoffmatrix. Die Oxidation der Matrix kann dabei bis zum CO2 und Wasser gehen. Gemäß des Artikels muss der Abbau der Kunststoffmatrix zeitlich begrenzt werden um eine Schädigung und den Abbau von Carbon-Fasern zu unterbinden.

Aufgabe der Erfindung ist es, ein Verfahren und eine Anlage zum Recycling carbonfaserverstärkter Polymere zu entwickeln, wobei eine vollständige Trennung von Carbonfasermatte und den Polymeren erzielt wird. Die Carbonfasermatte soll frei von Anhaftungen gewonnen werden und kann als originäres Primärhalbzeug dem Prozess der Herstellung von carbonfaserverstärkten Bauteilen wieder zugeführt werden.

Diese Aufgabe wird mit den kennzeichnenden Merkmalen des erstenund neunten Patentanspruchs gelöst.

Vorteilhafte Ausgestaltungen ergeben sich aus den Unteransprüchen.

Die Erfindung betrifft ein Verfahren zum Recycling carbonfaserverstärkter Polymere, aufweisend mindestens zwei Reaktoren wobei in den Reaktoren ein Reaktionsprozess zur Trennung von Carbonfasern/Carbonfasermatten und Polymeren erfolgt derart, dass ein vorgeheiztes wässriges Fluid als Lösungsmittel Anwendung findet. Das wässrige Fluid wird unter Druck in wässrigem Zustand gehalten und in flüssigem Zustand in die Reaktoren eingespritzt, wobei in den Reaktoren ein hoher Druck und eine hohe Temperatur oberhalb der Siedekurve des wässrigen Fluids vorliegen. Nach Abschluss des Reaktionsprozesses liegen die von den Polymeren gereinigten Carbonfasern/Carbonfasermatten sowie die in der Reaktion entstehende Reaktionslösung getrennt vor. Durch Trennung der Carbonfasern und der Reaktionslösung, welche die aus den Polymeren entstandenen Solvolyseprodukte enthält, wird eine Benetzung der Carbonfasermatten oder Carbonfasern vermieden, damit diese im Wiedereinsatz für neue hochwertige carbonfaserverstärkte Bauteile nicht mit Polymerresten und/oder Schlichte benetzt und damit bruchgefährdet sind. Auch die Solvolyseprodukte können dem Herstellungsprozess für die Polymere sofort wieder hinzugefügt werden, so dass aus diesem Recyclingverfahren keine Abprodukte entstehen, welche in irgendeiner Weise bearbeitet, gereinigt, deponiert oder anderweitig entsorgt werden müssen.

in den Reaktoren der Anlage wird Lösungsmittel in Form von sauerstoffhaltigen Flüssigkeiten, vorzugsweise Wasser eingesetzt, wobei die Temperatur im Reaktor über dem kritischen Bereich des Lösungsmittels, im Falle von Wasser höher als 374,12°C und der Druck im Reaktor höher als 221,2 bar liegen. Des Weiteren kann Wasser mit Lösungsmittel versetzt sein, wobei auf Chemikalien verzichtet wird.

Dabei entsteht in den Reaktoren eine vollständige Trennung der Carbonfasern oder Carbonfasermatten von der entstehenden Reaktionslösung, in welcher sich die gelösten Abbauprodukte der Polymere befinden.

Die carbonfaserverstärkten Polymere werden außerhalb der Reaktoren vorbereitet und anschließend mittels Container in die Reaktoren eingesetzt, wobei die carbonfaserverstärkten Polymere in den Containern von dem wässrigen Fluid umspült werden. Die Container können bei Temperaturen über 100 °C in die Reaktoren eingesetzt und entnommen werden.

Die so gewonnenen Carbonfasern/Carbonfasermatten sind frei von Anhaftungen der Reaktionslösung und können so als Primärhalbzeuge dem Recyclingprozess entnommen werden. Somit eignen sie sich für den Herstellungsprozess von zu festigkeitsbelasten den Bauteilen aus carbonfaserverstärkten Polymeren.

Die in den Reaktoren, während des Recyclingprozesses, entstehende Reaktionslösung, kann sofort in den Herstellungsprozess für Ausgangschemikalien für die Polymerherstellung als chemisches Halbprodukt wieder zugeführt und verwendet werden. Nach dem Abschluss des Reaktionsprozesses im Reaktor wird die Reaktionslösung im Reaktor heruntergekühlt, wobei Druck und Temperatur derart gewählt sind, dass diese sich zum Zeitpunkt des Austreibens der Reaktionslösung aus den Reaktoren oberhalb der Siedekurve der Reaktionslösung einpegeln derart, dass sich die Reaktionslösung im flüssigen Zustand befindet. Die durch die Kühlung im Reaktor freiwerdende Wärme wird mittels einer Wärmerückgewinnungseinrichtung dem nächsten Reaktor, welcher für den nächsten Prozess bereit ist, zugeführt.

Dabei wird die flüssige Reaktionslösung in mindestens einen Entspannungsbehälter ausgetrieben. Die für das beschriebene Verfahren benötigte Lösungsmittel- bzw. Wassermenge ($V_w$) berechnet aus der Differenz zwischen dem Gesamtvolumen Druckgefäß ($V_G$), dem Volumen des innenliegenden Heizliners ($V_{HL}$) und dem Nutzvolumen des CFK-Recyclingcontainers ($V_{NC}$) multipliziert mit einer Konstante. Daraus ergibt sich die Formel zur Berechnung wie folgt:

$$V_W = (V_G - V_{HL} - V_{CFK}) * 0,154$$

Die Verweilzeit (Kernzeit) der Polymere in der Reaktorkammer beträgt im Wesentlichen 20 Minuten, zuzüglich Aufheizzeit und Abkühlphase.

Die Erfindung betrifft weiterhin eine Anlage zum Recycling carbonfaserverstärkter Polymere, wobei die Anlage mindesten 2 Reaktoren mit jeweils einer Heizung und/oder Kühlung und eine Wärmerückgewinnungseinrichtung aufweist. Die Reaktoren sind mit carbonfaserverstärkten Polymeren bestückbar und weisen eine Einrichtung zum Einspritzen eines flüssigen Lösungsmittels auf derart, dass die carbonfaserverstärkten Polymere, nach dem Aufheizen auf Reaktionstemperatur, von dem Lösungsmittel umspült werden.

Die Reaktoren in erfindungsgemäßer Anlage sind für Temperaturen zwischen 374,12°C und 450°C und Drücken zwischen 221,2bar und 300bar ausgelegt und mittels Schnellverschlüsse verschließbar. Die mindestens zwei Reaktoren können nacheinander den Recyclingprozess realisieren. Das für den Recyclingprozess notwendige Recyclinggut wird außerhalb der Reaktoren in Container geladen wobei die Container in die geöffneten vorgeheizten Reaktoren einsetzbar sind. Nach Abschluss des Recyclingprozesses werden die Container wieder aus den, noch unter erhöhten Temperaturen stehenden, Reaktoren entnommen, wobei die Reaktoren zu diesem Zeitpunkt Temperaturen zwischen 100°C und 374,12°C besitzen.

Nach dem Ende des Recyclingprozesses sind folgend die Reaktionslösung und Carbonfasern oder Carbonfasermatten getrennt.

Die Temperaturen innerhalb der Reaktoren erfolgen mittels Heizregimen, wobei das Heizregime sowohl Kühlung wie auch Aufheizung übernimmt. Dabei wird die bei der Kühlung des ersten Reaktors gewonnene Wärmemenge genutzt um den zweiten Reaktor aufzuheizen.

Das für den Recyclingprozess genutzte Lösungsmittel wird in einem separaten Generator aufheizt, wobei die Temperatur und der Druck des Lösungsmittels derart im Verhältnis stehen, dass sich das Lösungsmittel immer oberhalb der Siedekurve befindet.

Des Weiteren wird erfindungsgemäß ein Schnellverschluss zum Verschließen der Reaktoren beansprucht. Der Schnellverschluss wird für einen Reaktor zum Aufsetzen auf einem Reaktordeckel verwendet, bestehend aus einer Kombination einer Haube mit besonders geformten Durchbrüchen, Spezialschrauben und einem Hydraulikzylinder. Die Haube wird auf den Reaktordeckel aufgesetzt und mittels Drehung mit den Spezialschrauben in Wirkverbindung gebracht und verriegelt. Der Schnellverschluss ist so dimensioniert, dass er bei den Reaktionsparametern gemäß diesem Verfahren die Reaktoren sicher verschlossen hält.

Die Haube weist einen Flansch mit sich verjüngenden Langlöchern auf, durch welchen die Köpfe der Spezialschrauben hindurchgefädelt sind. Somit wird eine Verriegelung bei einer Drehung der Haube realisiert

Die Polymere werden einer Solvolyse und einer Spaltung unterzogen und liegen am Ende des Recyclingprozesses als flüssige Lösung vor. Diese Lösung kann als chemisches Halbprodukt sofort dem Herstellungsprozess für Ausgangschemikalien der Polymerherstellung wieder zugefügt werden. Damit arbeitet das erfindungsgemäße Verfahren ohne Rückstände. Es fallen keinerlei gasförmige, flüssige oder feste Abfallprodukte an, welche deponiert, verbrannt oder anderweitig entsorgt werden müssen.

Das erfindungsgemäße Verfahren arbeitet bei Temperaturen oberhalb von 374,12 °C und Drücken von oberhalb 221,2 bar. Die maximale Zeit für den Solvolyseprozess liegt unter 90 Minuten für jeweils eine Reaktorbefüllung.

Bei dem in der zitierten Literaturstelle beschriebenen Verfahren wird allerdings die Effektivität der hier vorliegenden Erfindung nicht erreicht. Das erfindungsgemäße Verfahren kann die gewonnenen Reaktionsprodukte wiederholt im Prozess einsetzen, bis eine Grenzkonzentration erreicht ist, die ohne weitere Behandlung der Gewinnung von Phenolen zugeführt werden kann. Dieses Gemisch kann bereits an dieser Stelle werthaltig der chemischen Industrie zugeführt werden. Die wiederholte Einsetzung der Reaktionslösung senkt, bedingt durch den genutzten Wärmeinhalt des Mediums, erheblich die Kosten für die aufzubringende Wärmeenergie. Das erfindungsgemäße Verfahren beinhaltet eine energietechnische Optimierung durch Wärme-Rückgewinnung.

Das erfindungsgemäße Verfahren und die Vorrichtung beinhalten in den einzelnen Schritten weitere optimierte Prozessschritte (z.B. Reaktor-Schnellverschluss für erhöhte Temperaturen), die eine Zeit- und Energieeinsatz-Reduktion zur Folge haben.

Bei dem erfindungsgemäßen Verfahren werden durch getrennte Fluidkonditionierung die Prozesszeiten drastisch reduziert. Die getrennte Fluidaufbereitung reduziert (bei Ausnutzung von Wärmeinhalten des Reaktionsgemisches) ebenfalls den Energieeinsatz.

Die Erfindung wird nachfolgend an einem Ausführungsbeispiel und zugehörigen Zeichnungen näher erläutert.

Es zeigen:

Figur 1      eine schematische erfindungsgemäß ausgebildete Anlage,
Figur 2      einen Schnellverschluss,
Figur 3      den Flanschbereich mit Langlöchern.

Gemäß Figur 1 besitzt die Anlage mindestens zwei im Wesentlichen baugleiche Reaktoren R1, R2, wobei auch mehr als zwei Reaktoren verwendbar sind. Während der erste Reaktor R1 den Reaktionszyklus realisiert, wird der zweite Reaktor R2 mit dem Recyclinggut beladen und verschlossen. Das Recyclinggut wird in nicht dargestellte Container eingebracht und anschließend mit dem Container komplett in den Reaktor R1 beladen, bzw. auch wieder komplett, nach Ende des Reaktionszyklus, entnommen. Die Container sind so gestaltet, dass ein Lösungsmittel während des Prozesses ungehindert die carbonfaserverstärkten Polymere umspülen kann. Nach Ende des Prozesses erfolgt eine strikte Trennung von Carbonfasermatten und der Reaktionslösung.

Das Lösungsmittel, zum Beispiel Wasser, wird nicht drucklos und mit einer Temperatur von 20 °C in den Reaktor R1, R2 eingefüllt, da so der Reaktor R1, R2 bei jedem Zyklus auf 20 °C abgekühlt und dann wieder auf Reaktionstemperatur aufgeheizt werden müsste. Bei der erfindungsgemäßen Gestaltung der Anlage und deren Komponenten wird das Lösungsmittel in einem separaten "Heißwassergenerator" 1 aufgeheizt. Die Aufheizung erfolgt auf eine Temperatur oberhalb von 100 °C. Dabei wird der Aufheizprozess des Lösungsmittels so gesteuert, dass immer ein Druck oberhalb der Siedekurve des Lösungsmittels entsteht. Damit befindet sich dieses Lösungsmittel im flüssigen Zustand. Die Aufheizung erfolgt soweit, bis die Temperatur des Lösungsmittels und die Temperatur des Reaktors R1, R2 annähernd gleich sind. Anschließend wird das Lösungsmittel in den verschlossenen, jeweils für den nächsten Prozess vorgeheizten Reaktor eingespritzt.

Für eine optimale Energieausnutzung besitzt die erfindungsgemäße Anlage ein Wärmerückgewinnungssystem 2, das die Wärmekapazitäten der Reaktoren R1, R2 optimal nutzt. Dabei erhalten die Reaktoren R1, R2 eine Heizung/Kühlung 3 im Reaktionsraum, wobei die Heizung/Kühlung 3 mit flüssigen Medien erfolgt, welche die Reaktionstemperatur, ohne Verdampfungs- und Verkokungserscheinungen ermöglichen. Dabei wird der erste Reaktor R1 mittels dieser Heizung 3, nach dem Beladen mit dem Container und dem Verschließen mittels eines Schnellverschlusses 4 auf die vorgesehene Temperatur geheizt, bei welcher das Lösungsmittel eingespritzt wird.

Nach erfolgter Einspritzung startet der weitere Aufheizprozess und anschließend der Reaktionsprozess, sobald die Verfahrensdaten für Druck von 221,2 bar und Temperatur von 374,12 °C erreicht sind. Nach Abschluss des Prozesses wird der Wärmeinhalt dieses Reaktors R1 mittels der Heizung/Kühlung 3 aus diesem Reaktor R1 abgezogen und zur Aufheizung des für den nächsten Reaktionszyklus vorgesehenen Reaktors R2 genutzt.

Der erste Reaktor R1 wird so weit herabgekühlt, bis die Temperatur für das Austreiben der Reaktionslösung erreicht ist. Der zweite Reaktor R2 wird hingegen auf eine Temperatur vorgeheizt, bei welcher das Einspritzen des Lösungsmittels erfolgen kann. Der Druck und die Temperatur sind dabei im Reaktor R1, R2 derart voneinander abhängig einzustellen, dass diese oberhalb der Siedekurve der Reaktionslösung liegen. Damit befindet sich die Reaktionslösung beim Austreiben aus dem Reaktor im flüssigen Zustand. Vor dem Austreiben der Reaktionslösung sollte eine Abtropfphase eingehalten werden, in welcher die restlichen Reaktionslösungsrückstände von den gereinigten Carbonfasern und Carbonfasermatten abtropfen können.

Das Austreiben der Reaktionslösung erfolgt in einen Entspannungsbehälter 5. In diesem Entspannungsbehälter 5 wird die Reaktionslösung auf Raumtemperatur und Umgebungsdruck heruntergekühlt und kann anschließend einem Sammelbehälter 6 zum Abtransport zugeführt. Des Weiteren sind Produktabzüge 7, Vorrichtungen zur Produktentspannung 8 und eine Sicherheitsentspannung 9 verbaut, welche ebenfalls dem Entspannungsbehälter 5 zugeführt werden.

Nach dem Abschluss des Prozesses im zweiten Reaktor R2 kann die freiwerdende Wärme während der Abkühlung wiederum für die Aufheizung des ersten Reaktors R1, oder eines weiteren Reaktors, verwendet werden.

Die Reaktoren werden bei der erfindungsgemäßen Ausführung nicht, wie bei normalen Druckgefäßen, mit der Verbindung von Schrauben und Muttern und dem zeitaufwändigen Schraubenanziehen verschlossen, sondern mit einem gemäß Figur 2 und 3 dargestellten Schnellverschluss 4. Dieser ist mit wenigen Handgriffen auf den Reaktordeckel 4.1 aufsetzbar und kann vorteilhafter Weise mittels hydraulischer Kraft in Form eines Kolbens mit diesem verbunden werden, wobei mittels der Hydraulik die notwendigen Dichtkräfte aufgebracht werden.

Der Schnellverschluss besteht aus einer Haube 4.2, mit Flansch 4.3. Dieser Flansch 4.3 hat Löcher 4.4, durch welche die Köpfe der Spezialschrauben 4.5, beim Aufsetzen auf den Reaktordeckel 4.1, hindurchgefädelt werden können. Die Löcher 4.4 sind in Form von Langlöchern mit sich verjüngendem Durchmesser ausgebildet, wobei deren Breite dem Durchmesser des Dehnschaftes der Spezialschrauben 4.5 entsprechen. Durch eine Drehung der Haube 4.2, mit dem Flansch 4.3 um einige Grad wird die Haube 4.2 verriegelt und kann sich nicht mehr vom Reaktordeckel 4.1 abheben. Im Inneren der Haube 4.2 kann sich ein Hydraulikzylinder befinden, welcher nach dieser Verriegelung mit Druck beaufschlagt wird. Dieser Hydraulikzylinder hebt die Haube 4.2, mit Flansch 4.3, indem er sich an dem Reaktordeckel 4.1 abstützt, an und verspannt die Haube 4.2 an den Köpfen der Spezialschrauben 4.5. Dadurch wirkt die Kraft des Hydraulikzylinders auf den Reaktordeckel 4.1 und hält diesen dicht auf dem Reaktor. Durch spezielle Schaltungen in der Hydraulikanlage wird verhindert, dass bei einem eventuellen Druckabfall im Hydrauliksystem das Reaktionsfluid aus dem Reaktor austreten kann.

Der Schnellverschluss ist, in Verbindung mit den Entspannungseinrichtungen derart gestaltet, dass die Reaktoren bei Temperaturen erheblich über 100 °C verschlossen und geöffnet werden können.

## Bezugszeichenliste

| 1 | Heißwassergenerator |
| 2 | Wärmerückgewinnungssystem |
| 3 | Heizung/Kühlung |
| 4 | Schnellverschluss |
| 4.1 | Reaktordeckel |
| 4.2 | Haube |
| 4.3 | Flansch |
| 4.4 | Langlöcher |
| 4.5 | Spezialschraube |
| 5 | Entspannungsbehälter |
| 6 | Sammelbehälter |
| 7 | Produktabzug |
| 8 | Produktentspannung |
| 9 | Sicherheitsabzug |
| 10 | Sicherheitswasserbad |
| R1 | erster Reaktor |
| R2 | zweiter Reaktor |
| V | Ventil |

## Patentansprüche

1. Verfahren zum Recycling carbonfaserverstärkter Polymere, aufweisend mindestens zwei Reaktoren (R1, R2), wobei in den Reaktoren ein Reaktionsprozess zur Trennung von Carbonfasern/ Carbonfasermatten und Polymeren erfolgt derart, dass ein vorgeheiztes wässriges Fluid als Lösungsmittel Anwendung findet, wobei das wässrige Fluid unter Druck in flüssigem Zustand gehalten wird und in flüssigem Zustand in den jeweiligen Reaktor (R1, R2) eingespritzt wird, wobei in den Reaktoren (R1, R2) jeweils ein hoher Druck größer 19 bar und eine Temperatur oberhalb der Siedekurve des wässrigen Fluids vorliegen, und nach Abschluss des Reaktionsprozesses, die von den Polymeren gereinigten Carbonfasern/ Carbonfasermatten von der während des Reaktionsprozesses entstehenden Reaktionslösung getrennt sind, wobei in den Reaktoren der Anlage Lösungsmittel in Form von sauerstoffhaltigen Flüssigkeiten im überkritischen Bereich eingesetzt werden und als sauerstoffhaltige Flüssigkeit Wasser eingesetzt wird, wobei die Temperatur im Reaktor höher als 374,12°C und der Druck im Reaktor höher als 221,2 bar liegen, wobei nach Abschluss des Prozesses im ersten Reaktor R1 der Wärmeinhalt des Reaktors R1 mittels einer Heizung/Kühlung 3 aus dem Reaktor R1 abgezogen und zur Aufheizung des für den nächsten Reaktionszyklus vorgesehenen Reaktor R2 genutzt wird.

2. Verfahren nach Anspruch 1, **dadurch gekennzeichnet, dass** in den Reaktoren eine vollständige Trennung der Carbonfasern oder Carbonfasermatten von der entstehenden Reaktionslösung, in welcher sich die gelösten Abbauprodukte der Polymere befinden, erfolgt.

3. Verfahren nach Anspruch 1 oder 2, **dadurch gekennzeichnet, dass** die carbonfaserverstärkter Polymere außerhalb der Reaktoren vorbereitet und in Container verbracht und anschließend mittels der Container in die Reaktoren eingesetzt werden, wobei die carbonfaserverstärkten Polymere in den Containern von dem wässrigen Fluid umspült werden.

4. Verfahren nach einem der Ansprüche 1 bis 3, **dadurch gekennzeichnet, dass** die gewonnenen Carbonfasern/Carbonfasermatten frei von Anhaftungen der Reaktionslösung als Primärhalbzeuge dem Recyclingprozess entnommen werden können.

5. Verfahren nach einem der Ansprüche 1 bis 4, **dadurch gekennzeichnet, dass** die in den Reaktoren, während des Recyclingprozesses, entstehende Reaktionslösung, sofort in den Herstellungsprozess für Ausgangschemikalien für die Polymerherstellung als chemisches Halbprodukt wieder zugeführt werden.

6. Verfahren nach einem der Ansprüche 1 bis 5, **dadurch gekennzeichnet, dass** nach dem Abschluss des Reaktionsprozesses im Reaktor die Reaktionslösung im Reaktor heruntergekühlt wird, wobei Druck und Temperatur derart gewählt sind, dass diese sich zum Zeitpunkt des Austreibens der Reaktionslösung aus den Reaktoren oberhalb der Siedekurve der Reaktionslösung einpegeln derart, dass sich die Reaktionslösung im flüssigen Zustand befindet und, dass die frei werdende Wärme mittels einer Wärmerückgewinnungseinrichtung wieder dem Reaktor zugeführt wird.

7. Verfahren nach einem der Ansprüche 1 bis 6, **dadurch gekennzeichnet, dass** die flüssige Reaktionslösung in mindestens einen Entspannungsbehälter ausgetrieben wird, wobei die Reaktionslösung in dem Entspannungsbehälter vorzugsweise auf Raumtemperatur und Umgebungsdruck herunter gekühlt wird.

8. Anlage zum Recycling carbonfaserverstärkter Polymere, wobei die Anlage mindesten 2 Reaktoren mit jeweils einer Heizung und/oder Kühlung und eine Wärmerückgewinnungseinrichtung aufweist, **dadurch gekennzeichnet, dass** die Reaktoren mit carbonfaserverstärkten Polymeren bestückbar sind und eine Einrichtung zum Einspritzen flüssigen eines Lösungsmittels aufweisen derart, dass die carbonfaserverstärkten Polymere von dem Lösungsmittel umspült werden, wobei die Reaktoren für Temperaturen zwischen 374,12°C und 450°C und Drücken zwischen 221,2bar und 300bar ausgelegt sind.

9. Anlage nach Anspruch 8, **dadurch gekennzeichnet, dass** die Reaktoren über Schnellverschlüsse verschließbar sind.

10. Anlage nach einem der Ansprüche 8 und 9, **dadurch gekennzeichnet, dass** die mindestens zwei Reaktoren parallel oder nacheinander den Recyclingprozess realisieren.

11. Anlage nach einem der Ansprüche 8 bis 10, **dadurch gekennzeichnet, dass** das Recyclinggut außerhalb der Reaktoren in Container ladbar und die Container in die geöffneten vorgeheizten Reaktoren einsetzbar ist.

12. Anlage nach einem der Ansprüche 8 bis 11, **dadurch gekennzeichnet, dass** die Container nach Abschluss des Recyclingprozesses wieder aus den, noch unter erhöhten Temperaturen stehenden, Reaktoren entnehmbar sind, wobei die Reaktoren zu diesem Zeitpunkt Temperaturen zwischen 100°C und 374,12°C besitzen.

13. Anlage nach einem der Ansprüche 8 bis 12, **dadurch gekennzeichnet, dass** nach dem Ende des Recyclingprozesses Reaktionslösung und Carbonfasern oder Carbonfasermatten getrennt sind.

14. Anlage nach einem der Ansprüche 8 bis 13, **dadurch gekennzeichnet, dass** die Heizung der Reaktoren über ein Heizregime erfolgt, wobei das Heizregime sowohl Kühlung wie auch Aufheizung übernimmt und dass insbesondere die bei der Kühlung des ersten Reaktors gewonnene Wärmemenge den zweiten Reaktor aufheizt.

15. Anlage nach einem der Ansprüche 8 bis 14, **dadurch gekennzeichnet, dass** den Reaktoren ein das Lösungsmittel aufheizender Heißwassergenerator (1) vorgeschaltet ist, wobei die Temperatur und der Druck des Lösungsmittels derart im Verhältnis stehen, dass sich das Lösungsmittel immer oberhalb der Siedekurve und damit im flüssigen Zustand befindet.

**Claims**

1. Method for recycling carbon-fiber-reinforced polymers, comprising at least two reactors (R1, R2), wherein a reaction process for separating carbon fibers/carbon fiber mats and polymers takes place in the reactors in such a way that a preheated aqueous fluid is used as solvent, wherein the aqueous fluid is kept in the liquid state under pressure and is injected in the liquid state into the respective reactor (R1, R2), wherein a high pressure greater than 19 bar and a temperature above the boiling-point curve of the aqueous fluid is present in each of the reactors (R1, R2), and after completion of the reaction process the carbon fibers/carbon fiber mats purified from the polymers are separated from the reaction solution formed during the reaction process, wherein solvents in the form of oxygen-containing fluids in the supercritical range are used in the reactors of the unit, and water is used as the oxygen-containing fluid, wherein the temperature in the reactor is higher than 374.12°C and the pressure in the reactor is higher than 221.2 bar, wherein, after completion of the process in the first reactor R1, the heat content of the reactor R1 is extracted from the reactor R1 by means of a heater/cooler 3 and used to heat the reactor R2 provided for the next reaction cycle.

2. Method according to claim 1, **characterized in that** a complete separation of the carbon fibers or carbon fiber mats from the resulting reaction solution, in which the dissolved degradation products of the polymers are present, is carried out in the reactors.

3. Method according to claim 1 or 2, **characterized in that** the carbon-fiber-reinforced polymers are prepared outside the reactors and transferred to containers and then inserted into the reactors by means of the containers, wherein the carbon-fiber-reinforced polymers in the containers are washed around by the aqueous fluid.

4. Method according to one of claims 1 to 3, **characterized in that** the obtained carbon fibers/carbon fiber mats can be removed from the recycling process as primary semifinished products free from adhesions of the reaction solution.

5. Method according to one of the claims 1 to 4, **char-**

**acterized in that** the reaction solution formed in the reactors during the recycling process is immediately fed back into the production process for starting chemicals for polymer production as a chemical semifinished product.

6. Method according to one of claims 1 to 5, **characterized in that**, after completion of the reaction process in the reactor, the reaction solution in the reactor is cooled down, wherein the pressure and temperature are selected in such a way that, at the time when the reaction solution is expelled from the reactors, they level off above the boiling-point curve of the reaction solution in such a way that the reaction solution is in the liquid state, and **in that** the heat released is fed back to the reactor by means of a heat recovery device.

7. Method according to one of claims 1 to 6, **characterized in that** the liquid reaction solution is expelled into at least one flash tank, wherein the reaction solution in the flash tank is preferably cooled down to room temperature and ambient pressure.

8. System for recycling carbon-fiber-reinforced polymers, wherein the system comprises at least two reactors, each having a heating and/or cooling system and a heat recovery device, **characterized in that** the reactors can be equipped with carbon-fiber-reinforced polymers and comprise a device for injecting liquid solvent in such a way that the carbon-fiber-reinforced polymers are washed around by the solvent, wherein the reactors are designed for temperatures between 374.12°C and 450°C and pressures between 221.2 bar and 300 bar.

9. System according to claim 8, **characterized in that** the reactors are closable via quick-acting closures.

10. System according to one of claims 8 and 9, **characterized in that** the at least two reactors realize the recycling process in parallel or successively.

11. System according to one of the claims 8 to 10, **characterized in that** the recycling material can be loaded into containers outside the reactors and the containers can be inserted into the opened preheated reactors.

12. System according to one of claims 8 to 11, **characterized in that** the containers can be removed again from the reactors, which are still at elevated temperatures, after completion of the recycling process, wherein the reactors have temperatures between 100°C and 374.12°C at this time.

13. System according to one of claims 8 to 12, **characterized in that**, after the end of the recycling process, reaction solution and carbon fibers or carbon fiber mats are separated.

14. System according to one of claims 8 to 13, **characterized in that** the heating of the reactors is effected via a heating regime, wherein the heating regime assumes both cooling and heating, and **in that**, in particular, the amount of heat obtained during the cooling of the first reactor heats the second reactor.

15. System according to one of claims 8 to 14, **characterized in that** a hot water generator (1) heating the solvent is connected upstream of the reactors, wherein the temperature and the pressure of the solvent are in such a ratio that the solvent is always above the boiling-point curve and thus in the liquid state.

**Revendications**

1. Procédé de recyclage de polymères renforcés de fibres de carbone, présentant au moins deux réacteurs (R1, R2), dans lequel un processus de réaction pour séparer des fibres de carbone/mats de fibres de carbone et des polymères a lieu dans les réacteurs de telle sorte qu'un fluide aqueux préchauffé est utilisé comme solvant, le fluide aqueux étant maintenu à l'état liquide sous pression et étant injecté à l'état liquide dans le réacteur respectif (R1, R2), une haute pression supérieure à 19 bars et une température supérieure à la courbe d'ébullition du fluide aqueux étant présentes dans chacun des réacteurs (R1, R2) et, après achèvement du processus de réaction, les fibres de carbone/mats de fibres de carbone débarrassés des polymères sont séparés de la solution réactionnelle formée pendant le processus de réaction, des solvants sous la forme de liquides contenant de l'oxygène dans le domaine supercritique étant utilisés dans les réacteurs de l'installation et de l'eau étant utilisée comme liquide contenant de l'oxygène, la température dans le réacteur étant supérieure à 374,12 °C et la pression dans le réacteur supérieure à 221,2 bars, dans lequel, après achèvement du processus dans le premier réacteur R1, la capacité thermique du réacteur R1 est extraite du réacteur R1 au moyen d'un moyen de chauffage/refroidissement 3 et utilisée pour chauffer le réacteur R2 prévu pour le cycle de réaction suivant.

2. Procédé selon la revendication 1, **caractérisé en ce qu'**une séparation complète des fibres de carbone ou des mats de fibres de carbone de la solution réactionnelle résultante, dans laquelle les produits de dégradation dissous des polymères sont présents, est effectuée dans les réacteurs.

3. Procédé selon la revendication 1 ou 2, **caractérisé**

**en ce que** les polymères renforcés de fibres de carbone sont préparés à l'extérieur des réacteurs et déplacés dans des conteneurs, puis insérés dans les réacteurs au moyen des conteneurs, les polymères renforcés de fibres de carbone dans les conteneurs étant baignés par le fluide aqueux.

4. Procédé selon l'une des revendications 1 à 3, **caractérisé en ce que** les fibres de carbone/mats de fibres de carbone obtenus peuvent être retirés du processus de recyclage, exempts d'adhérences de la solution réactionnelle, en tant que semi-produits primaires.

5. Procédé selon l'une des revendications 1 à 4, **caractérisé en ce que** la solution réactionnelle formée dans les réacteurs pendant le processus de recyclage est immédiatement renvoyée en tant que semi-produit chimique dans le processus de production de produits chimiques de départ pour la production de polymères.

6. Procédé selon l'une des revendications 1 à 5, **caractérisé en ce que**, après achèvement du processus de réaction dans le réacteur, la solution réactionnelle dans le réacteur est refroidie, la pression et la température étant choisies de telle sorte que, au moment où la solution réactionnelle est expulsée des réacteurs, elles se stabilisent au-dessus de la courbe d'ébullition de la solution réactionnelle de telle sorte que la solution réactionnelle se trouve à l'état liquide, et que la chaleur libérée est renvoyée au réacteur au moyen d'un dispositif de récupération de chaleur.

7. Procédé selon l'une des revendications 1 à 6, **caractérisé en ce que** la solution réactionnelle liquide est expulsée dans au moins un réservoir de détente, la solution réactionnelle dans le réservoir de détente étant de préférence refroidie à la température ambiante et à la pression ambiante.

8. Installation de recyclage de polymères renforcés de fibres de carbone, l'installation présentant au moins deux réacteurs comportant chacun un moyen de chauffage et/ou de refroidissement et un dispositif de récupération de chaleur, **caractérisée en ce que** les réacteurs peuvent être équipés de polymères renforcés de fibres de carbone et présentent un dispositif pour injecter un solvant liquide de telle sorte que les polymères renforcés de fibres de carbone soient baignés par le solvant, les réacteurs étant conçus pour des températures comprises entre 374,12 °C et 450 °C et des pressions comprises entre 221,2 bars et 300 bars.

9. Installation selon la revendication 8, **caractérisée en ce que** les réacteurs peuvent être fermés par des fermetures à action rapide.

10. Installation selon l'une des revendications 8 et 9, **caractérisée en ce que** lesdits au moins deux réacteurs réalisent le processus de recyclage en parallèle ou successivement.

11. Installation selon l'une des revendications 8 à 10, **caractérisée en ce que** le produit recyclable peut être chargé dans des conteneurs à l'extérieur des réacteurs et les conteneurs peuvent être insérés dans les réacteurs préchauffés ouverts.

12. Installation selon l'une des revendications 8 à 11, **caractérisée en ce qu'**après achèvement du processus de recyclage, les conteneurs peuvent être retirés des réacteurs qui sont encore à des températures élevées, les réacteurs présentant à ce moment-là des températures comprises entre 100 °C et 374,12 °C.

13. Installation selon l'une des revendications 8 à 12, **caractérisée en ce que**, à la fin du processus de recyclage, la solution réactionnelle et les fibres de carbone ou les mats de fibres de carbone sont séparés.

14. Installation selon l'une des revendications 8 à 13, **caractérisée en ce que** le chauffage des réacteurs est effectué au moyen d'un régime de chauffage, le régime de chauffage assurant aussi bien le refroidissement que le chauffage, et que, en particulier, la quantité de chaleur obtenue lors du refroidissement du premier réacteur chauffe le deuxième réacteur.

15. Installation selon l'une des revendications 8 à 14, **caractérisée en ce qu'**un générateur d'eau chaude (1) chauffant le solvant est monté en amont des réacteurs, la température et la pression du solvant étant dans un rapport tel que le solvant se trouve toujours au-dessus de la courbe d'ébullition et donc à l'état liquide.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011115966 A1
- DE 102008002846 A1
- DE 102013200482 A1
- JP 2005336331 A
- JP 2003190759 A
- FR 3007412 A1

**In der Beschreibung aufgeführte Nicht-Patentliteratur**

- **BAY Y et al.** *Chemical recycling of carbon fiber reinforced epoxy resin composites in oxygen in supercritical water*